Europäisches Patentamt

European Patent Office

Office européen des brevets

(19)

Publication number: **0 289 176**
**A2**

# EUROPEAN PATENT APPLICATION

(21) Application number: 88303415.9

(22) Date of filing: 15.04.88

(51) Int. Cl.⁴ **F16D 65/84** , **F16D 55/14**

(30) Priority: 01.05.87 GB 8710372

(43) Date of publication of application:
02.11.88 Bulletin 88/44

(84) Designated Contracting States:
DE FR GB IT

(71) Applicant: LUCAS INDUSTRIES public limited
company
Great King Street
Birmingham, B19 2XF West Midlands(GB)

(72) Inventor: **Colgate, Brian Martin**
**Old House The Rocks - Clearwell**
**Coleford Gloucestershire GL16 8JR(GB)**
Inventor: **Henson, Eric**
**14 Glade Close**
**Coedeva Cwmbran Gwent NP44 4TF**
**Wales(GB)**

(74) Representative: **Spall, Christopher John** et al
**BARKER, BRETTELL & DUNCAN 138 Hagley**
**Road**
**Edgbaston Birmingham B16 9PW(GB)**

(54) Improvements in braking members for vehicle disc brakes.

(57) A braking member for a vehicle disc brake comprises at least one metal plate (17, 18; 25) of generally annular outline. The plate is provided with angularly spaced recesses or slots (20, 28) which extend inwardly from the peripheral edge of the plate and define passages for the passage of air and/or liquid to increase the cooling of adjacent friction linings when the plate is installed in a brake and the brake is applied. The passages may be defined between two superimposed similar plates (17, 18) or the plate (25) may be sandwiched between two planar plates (26, 27).

FIG.1.

# IMPROVEMENTS IN BRAKING MEMBERS FOR VEHICLE DISC BRAKES

This invention relates to improvements in braking members for vehicle disc brakes of the kind comprising a generally annular disc like assembly which may comprise a rotatable rotor or a relatively stationary stator.

When the braking member comprises a rotor friction linings of annular outline are carried by opposite faces of the member and the member is adapted to be keyed to a rotatable shaft for axial sliding movement with respect to the shaft. When the braking member comprises a stator the shaft extends through the stator with substantial clearance and the stator is keyed against rotation with the shaft, being positioned between a pair of rotors.

Braking members of the kind set forth are suitable for incorporation in self-energising disc brakes of the kind in which rotors provided with linings of friction material are adapted to be brought into engagement with spaced opposed braking surfaces in a housing by an actuator mechanism comprising pressure plates located between the rotors and centred by stationary pilot lugs, and balls or rollers located in co-operating oppositely inclined recesses in the adjacent faces of the pressure plates, the application of the brake is initiated by moving the pressure plates angularly in opposite directions, and the pressure plates then move apart, due to the tendency for the balls or rollers to ride up ramps defined by the edges of the recesses, and into engagement with the rotors which are urged into engagement with the braking surfaces, the pressure plates being carried round with the rotors until one is arrested by the engagement of a lug on the plate with a drag-taking stop abutment in the housing, and the continued angular movement of the other pressure plate providing a servo action.

Self-energising brakes of the kind set forth may be dry or they may be made of the liquid cooled type, and such brakes are commonly used in tractors and like vehicles and are hereinafter called brakes of the kind set forth.

In brakes of this kind it is preferred to construct the linings from organic non-metallic materials rather than from inorganic metallic materials. For example the linings may be constructed by powder, moulding or felting techniques. Typically powder is applied to sintered material, moulding to resin, and felting of paper. Such materials are generally known as resin bonded fibre (RBF). Such organic material has a relatively high co-efficient of friction ($\mu$) and is relatively quiet in operation whereas conventional inorganic metallic, suitably sintered, material has a relatively low ($\mu$) and is relatively noisy in operation.

According to our invention a braking member for a vehicle disc brake includes at least one metal plate of generally annular outline provided with angularly spaced recesses or slots which extend inwardly from the outer peripheral edge of the plate and define passages for the passage of air and/or liquid to increase cooling of the adjacent friction linings when the brake is applied.

This, in turn, assists in increasing the wear life of the linings.

The slots may extend completely through the material of the plate, or recesses may extend into the plate from one face only of the plate. When the recesses extend into the plate from one face only, they may also extend radially from the outer peripheral edge of the plate to the inner peripheral edge.

When the metal plate comprises a rotor and annular friction linings are carried by its opposite sides, the slots extend from the outer peripheral edge of the plate to a position radially inwards of the inner peripheral edges of the linings. This enables air and/or liquid to circulate around both friction linings.

The plate co-operates with other components to form a stator.

When the slots extend inwardly from the outer peripheral edge of the plate the plate defines a core which is sandwiched between two components, each of planar configuration, so that the slots constitute channels extending between the two components.

When the recesses extend into the plate from one face only, two similar plates may be superimposed with projections defined in one plate between adjacent recesses being received in complementary recesses in the other plate, channels for the flow or air and/or liquid being defined by spaces between pairs of edges of adjacent projections, and between the outer faces of the projections and, possibly also, between the bases of the recesses in which they are received.

Preferably the recesses and the projections are of segmental outline.

Some embodiments of our invention are illustrated in the accompanying drawings in which:-

Figure 1 is a longitudinal section through a portion of a brake of the spreading type;

Figure 2 is a plan of a portion of a stator disposed between a pair of rotors for the brake of Figure 1;

Figure 3 is an exploded perspective view of the two components which constitute the stator of Figure 2;

Figure 4 is a plan of a portion of another stator disposed between a pair of rotors;

Figure 5 is an exploded perspective view of the stator of Figure 4;

Figure 6 is a side elevation of a metal plate for a stator;

Figure 7 is an end view of a stator incorporating the plate of Figure 6; and

Figure 8 is an end view of a rotor incorporating a modified plate.

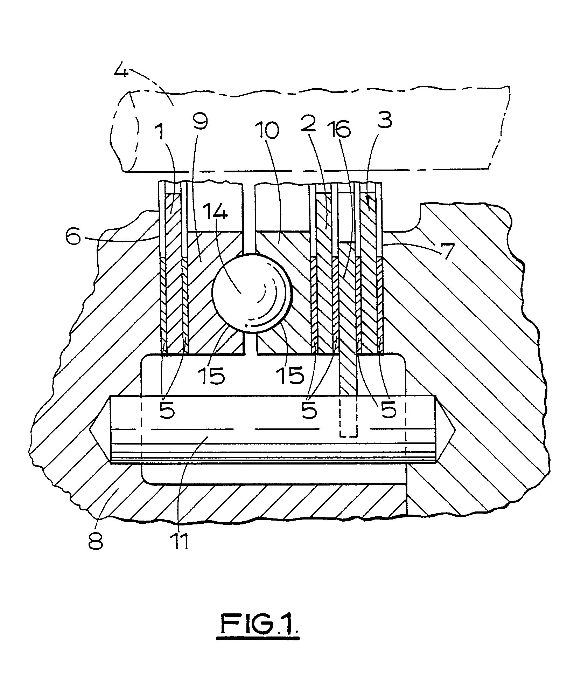

The brake illustrated in Figure 1 of the drawings is of a spreading type in which three rotatable friction discs 1, 2, 3 comprising rotors are splined for sliding movement on a rotatable shaft 4. Each disc is provided on opposite sides with linings 5 of a non-metallic friction material, suitably RBF, adapted to be brought into engagement with spaced opposed radial surfaces 6, 7 in a housing 8 by pressure plates 9, 10 located between an adjacent pair of the discs 1, 2 and centred by three angularly spaced stationary pilots. of which one is shown as comprising a pin 11. Balls 14 are located in co-operating oppositely inclined recesses 15 in the adjacent faces of the pressure plates 9, 10. An intermediate disc assembly 16 is disposed between the adjacent linings 5 of the two discs 2 and 3. The disc 16 assembly constitutes a stator which is keyed against rotation by means of the pin 11.

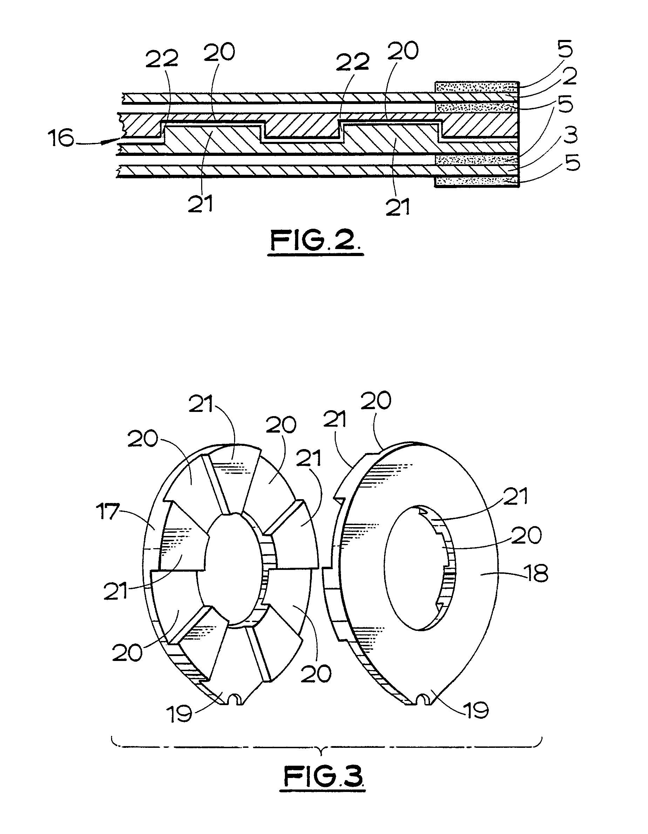

The stator 16 may be of the construction illustrated in Figures 2 and 3 of the drawings and comprise two similar metal plates 17, 18, each of which is generally of annular outline with a central opening of a diameter greater than that of the shaft 4 but which is extended to include a notched radial lug 19 for co-operation with the pin 11. Adjacent faces of the two plates 17, 18 are provided with a plurality of angularly spaced radial recesses 20 which are generally of segmental outline and extend between the inner and outer peripheral edges of the plates. The recesses 20 in the two plates 17 and 18 are so arranged that when the two plates are superimposed upon each other, projections 21 defined between adjacent recesses in one plate, say the plate 17, are received with clearances in complementary recesses in the other plate 18. The clearances define channels 22 for the passage of air and/or liquid through the stator 16 to provide an improved cooling effect when the stator 16 is installed in the brake and the brake is operated.

The application of the brake is initiated by moving the pressure plates 9, 10 angularly in opposite directions which causes the pressure plates 9, 10 to move axially relatively away from each other due to the tendency for the balls 14 to ride up ramps defined by the end faces of the recesses 15. This urges the friction discs 1 and 3 into engagement with the radial surfaces 6 and 7 on the housing 8. The pressure plates 9 and 10 are then carried round with the disc 1, 2 and 3 until one is arrested by the engagement of a lug on a respective plate with a drag-taking abutment, suitably the pin 11, whereafter continued angular movement of the other plate provides a servo action.

When the brake is applied the brake applying force is transmitted from an actuator mechanism comprising the pressure plates 9 and 10, and the balls 14, through the disc 2 and the intermediate disc 16, to the disc 3.

During the application of the brake the channels 22 in the intermediate disc 16 acts to facilitate cooling of the disc 16 and, in turn, of the linings 5, thereby increasing their wear life.

In a modification of the stator described above with reference to Figures 2 and 3, one of the slotted plates 17 or 18 may be replaced by a planar plate of similar outline. In such a construction the cooling channels are defined between the recesses in the plate 18 or 17, and the planar face of the planar plate with which the plate 18 or 17 co-operates.

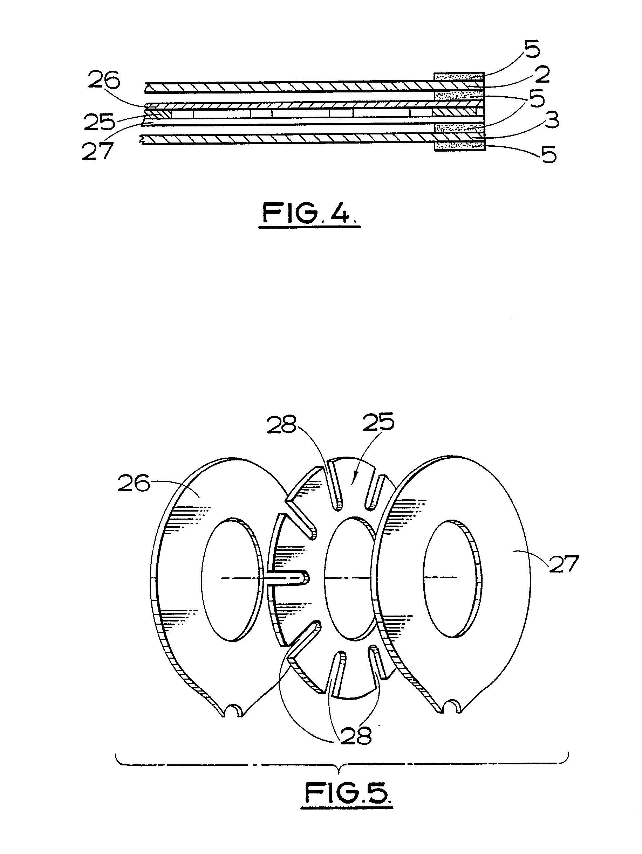

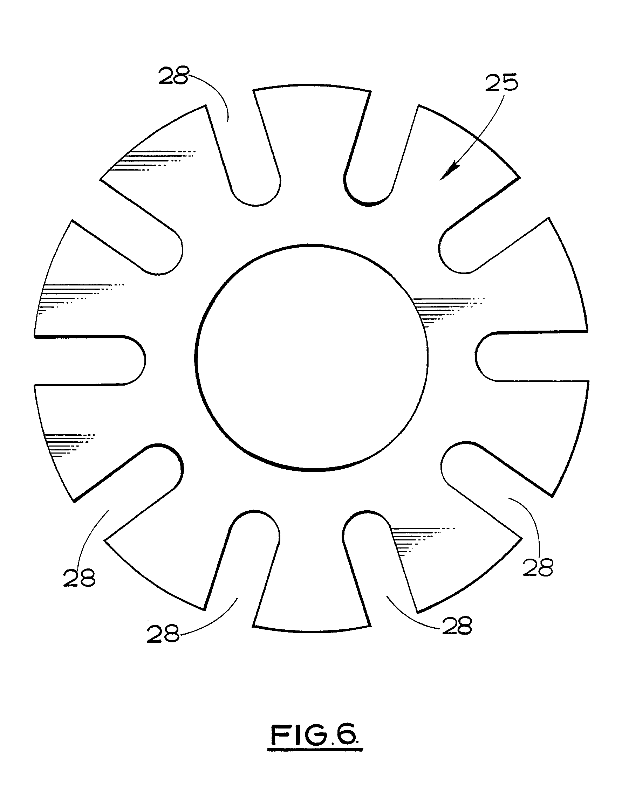

The stator illustrated in Figures 4 and 5 of the accompanying drawings comprises a central core plate 25 which is sandwiched between a pair of conventional stators 26, 27, each comprising a planar metal end plate of an outline similar to that of the plates 17 and 18 illustrated in Figure 3 of the drawings.

The central core plate 25 comprises a metal plate of annular outline which is provided in its outer peripheral edge with a plurality of angularly spaced radial slots 28 suitably eight in number. The slots 28 extend inwardly for a substantial distance.

Cooling channels are defined in the stator by the slots 28 and between the two end plates 26 and 27.

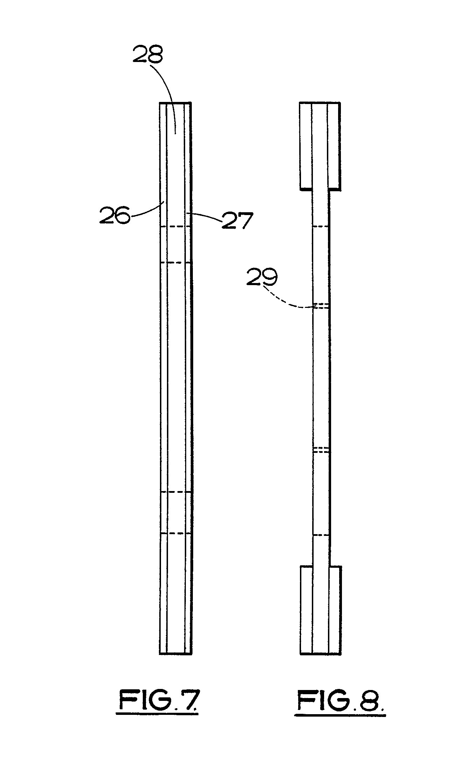

The stator illustrated in Figures 6 and 7 of the drawings is similar in construction to that of Figures 4 and 5, and corresponding reference numerals have been applied to corresponding parts. In this construction, however, the central core plate 25 is provided with ten angularly spaced slots 28.

The core plate of Figures 6 and 7 may be modified to form the disc of each rotor 1, 2 and 3. As illustrated in Figure 8 this is achieved by providing a similar core plate but which is extended in a radially inwards direction to provide a splined opening 29 by means of which the disc can be slidably mounted for axial sliding movement on the shaft 4.

In this construction the annular linings 5 of RBF traverse the slots 28 so that air and/or cooling liquid can circulate through the slots and around both friction linings 5.

## Claims

1. A self-energising disc brake in which rotors (1,2) provided with linings (5) of friction material are adapted to be brought into engagement with spaced opposed braking surfaces (6,7) in a housing (8) by an actuator mechanism comprising pressure plates (9,10) located between the rotors (1,2) and centred by stationary pilot lugs, and balls (14) or rollers located in co-operating oppositely inclined recesses in the adjacent faces of the pressure plates (9,10), the application of the brake is initiated by moving the pressure plates (9,10) angularly in opposite directions, the pressure plates (9,10) then move apart, due to the tendency for the balls (14) or rollers to ride up ramps defined by the edges of the recesses, and into engagement with the rotors (1,2) which are urged into engagement with the braking surfaces (6,7), the pressure plates (9,10) being carried round with the rotors (1,2) until one is arrested by the engagement of a lug on the plate with a drag-taking stop abutment 11 in the housing (8), the continued angular movement of the other pressure plate providing a servo action, characterised in that the braking member includes at least one metal plate (17,25) of generally annular outline provided with angularly spaced recesses (20) or slots (28) which extend inwardly from the outer peripheral edge of the plate (17,25) and define passages (22) for the passage of air and/or liquid to increase cooling of the adjacent friction linings when the brake is applied.

2. A disc brake according to Claim 1 characterised in that the slots (28) extend completely through the material of the plate (17,25).

3. A disc brake according to Claim 2 characterised in that the slots (28) extend from the outer peripheral edge of the plate (17,25) to a position radially inwards of the inner peripheral edge of a friction lining (5) on the plate (17,25).

4. A disc brake according to Claim 1 characterised in that the recesses (20) extend into the plate (17) from one face only on the plate (17) and extend radially from the outer peripheral edge of the plate to the inner peripheral edge of the plate.

5. The disc brake according to Claim 2 or Claim 3 characterised in that the plate (17,25) co-operates with other components to form a stator (16).

6. A braking member according to Claim 5 characterised in that the plate defines a core sandwiched between two components (26,27), each of planar configuration, such that the slots (28) constitute channels extending between the two components.

7. A braking member according to Claim 5 characterised in that two similar plates (17,18) are superimposed with projections (21) defined in one plate between adjacent recesses (20) being received in complementary recesses (20) in the other plate, channels (22) for air or liquid flow being defined by spaces between pairs of edges of adjacent projections (21), outer faces of projections and the bases of the recesses in which the projections are received.

8. A braking member according to Claim 6 characterised in that the recesses (20) and the projections (21) are of segmental outline.

9. A braking member according to any preceding claim characterised in that the friction linings are of resin bonded fibre.

FIG.1.

**FIG.2.**

**FIG.3**

FIG. 4.

FIG. 5.

FIG.6.

**FIG.7**   **FIG.8.**